Europäisches Patentamt

European Patent Office

Office européen des brevets

(19)

(11) Publication number: **0 422 737 A1**

(12)

# EUROPEAN PATENT APPLICATION

(21) Application number: 90202677.2

(51) Int. Cl.5: **F16L 33/22**

(22) Date of filing: 09.10.90

(30) Priority: 13.10.89 IT 2191889 U

(43) Date of publication of application:
17.04.91 Bulletin 91/16

(84) Designated Contracting States:
AT BE CH DE ES FR GB IT LI LU NL SE

(71) Applicant: CAZZANIGA S.p.A.
Via Mario Pagano 31
Milano(IT)

(72) Inventor: Pavanel, Roberto, c/o Cazzzaniga
S.P.A.
Via Parco
Biassono (Milano)(IT)

(74) Representative: Raimondi, Alfredo, Dott. Ing.
Prof.
Dott. Ing. Prof. RAIMONDI ALFREDO S.r.l.
Piazzale Cadorna 15
I-20123 Milano(IT)

(54) Quick-assembling sealed coupling without gasket, especially for deformable tubes.

(57) Coupling, especially for deformable tubes,
a hydraulic sealing element equipped with a head part (4) and with a shank part (2) capable of being inserted into the interior of the tube (3) to produce a surface deformation of same and mechanical holding means capable of being fitted around the exterior of the tube and equipped with coupling means adapted for (4c) engaging with the deformable surface of the tube by acting against said shank (6a) of the sealing element and with further means for fixing to the element (9) to be brought into connection with the deformable tube.

EP 0 422 737 A1

# Fig.2

# QUICK-ASSEMBLING SEALED COUPLING WITHOUT GASKET, ESPECIALLY FOR DEFORMABLE TUBES

The subject of the present invention is a quick-assembling sealed coupling for pipes or tubes of deformable type, in which both the hydraulic seal and the mechanical holding are achieved without the use of auxiliary elements.

In the art, numerous examples are known of realizations of couplings for tubes or pipes, including those of deformable type, which couplings are usually composed of many pieces including, in particular, a ring of elastic material to be applied to a sleeve for creating the hydraulic seal of the coupling and a deformable metal ring which, under the clamping action of a nut, compresses the tube onto the seal itself, thus creating the mechanical hold for the tube.

Said types of coupling, however, have many disadvantages, among which are the high number of component parts which increase the axial dimension and cause loss of seal, the impossibility of utilizing the coupling also for various types of piping, such as, for example, those of baked copper and on alloys and the like with the consequent need to keep stores stocked with different components.

Furthermore, said couplings are difficult to use and assemble and make possible a connection which can be effected once only, it being necessary, for a subsequent dismantling and re-assembly, to insert new deformable rings for the mechanical hold of the tube.

The technical problem therefore arises of creating a coupling for deformable tubes or pipes, composed of a reduced number of parts, which shall achieve both the hydraulic seal and the mechanical hold without intermediate elements, which shall be easy to assemble and shall make possible subsequent dismantlings and re-assemblies without the need for replacing the parts, and which shall moreover be of small axial dimension and low weight.

Said results are achieved by present invention, which provides a coupling especially for deformable tubes or pipes, comprising a hydraulic sealing element equipped with a head part and with a shank part capable of being inserted into the interior of the tube to create a surface deformation of same and mechanical holding means capable of being fitted around the outside of the tube and equipped with coupling means adapted for engaging with the deformed surface of the tube acting against said shank of the sealing element and with further means for fixing to the element to be brought into connection with the deformable tube.

Said head part of the hydraulic sealing element comprises a plane external surface leading into a rounded toroidal surface adapted for abutting against a conical corresponding surface of the element to be connected to the tube, forming the seal and making possible coupling together, even in conditions of imperfect axial alignment of the various parts.

On said shank part of the sealing element there are also provided a first and a second annular projection, defining a relief groove and adapted for deforming the internal and external surfaces of the tube itself on insertion, said first projection having an external surface of conical form to facilitate insertion.

According to the present invention, said mechanical holding means are substantially composed of a nut capable of sliding on the external surface of the tube and equipped with an internal surface, adjacent to the slide hole, which is of conical form and is adapted for engaging, during the phase of coupling up to the element to be connected, with the deformed external surface of the tube, thus creating the mechanical holding by compression of the tube onto the corresponding conical surface of said shank of the sealing element; the coupling together between said nut and the element to be coupled being achieved by screwing up the nut on said element.

Further details will become apparent from the following description, prepared with reference to the attached drawings, in which there are shown:

in Figure 1: a partial section through the coupling before assembly;

in Figure 2: a partial section through the coupling in operation after assembly.

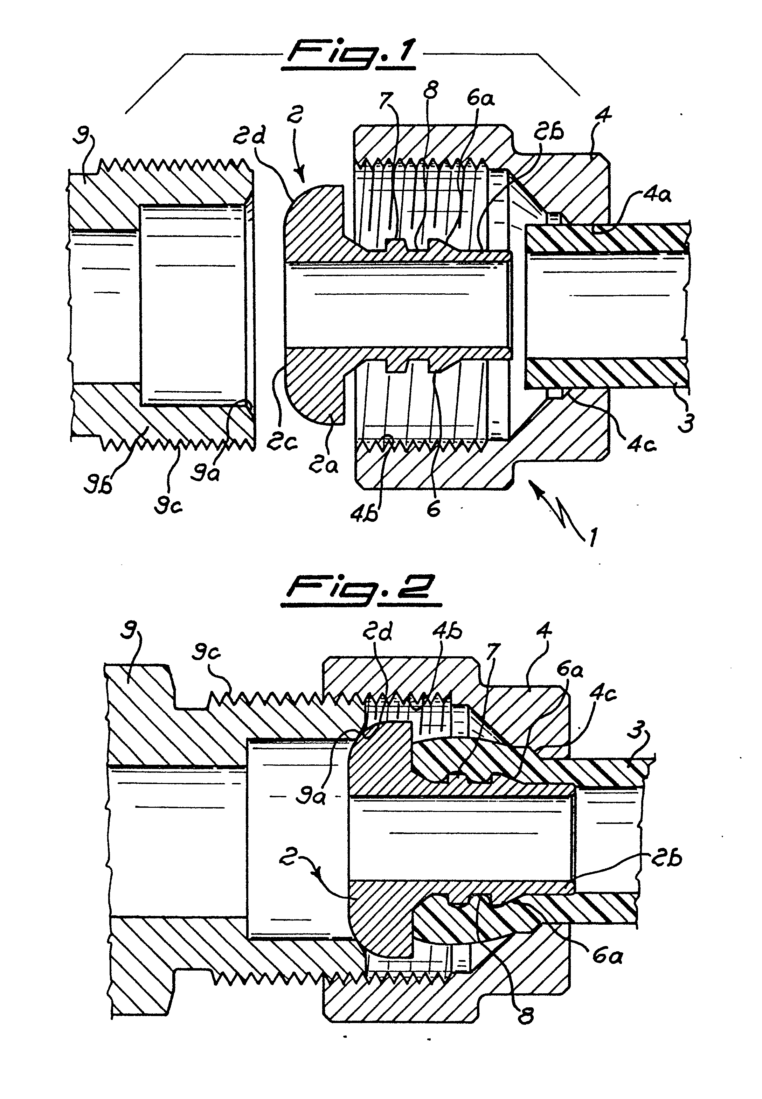

As can be seen from Fig. 1, the coupling 1 according to this invention is composed of a sleeve 2, which has a head part 2a and a substantially cylindrical shank 2b for insertion into the interior of a tube 3, and of a nut 4, equipped with a through hole 4a, into which can be inserted said tube 3.

On said cylindrical part 2b are formed a first annular projection 6 having an external surface 6a of conical form to facilitate the insertion of the tube 3, and a second projection 7 of square form: said two projections 6 and 7 define, between them, a relief groove 8.

The head part 2a of the sleeve 2 possesses, in turn, a plane external surface 2c leading into a toroidal rounded surface 2d, adapted for engaging with a corresponding conical surface 9a of a coupling element 9, which has an end external surface 9b equipped with threading 9c adapted for engaging with a female thread 4b formed on the internal surface of said nut 4, the internal shape of which is completed by an internal surface zone of conical form 4c, and adjacent to the through hole 4a.

For effecting the coupling together between the tube 3 and the element to be coupled-on 9, the nut 4 is threaded onto the tube 3 by sliding it along a distance greater than the length of the cylindrical shank 2b of the sleeve 2, and this sleeve is inserted into the interior of the tube until the lower flat surface of the head 2 comes into bearing against the free end of the tube.

Said tube, as a result of the insertion of the sleeve 2, deforms both internally, settling down on the serrated surface composed of said annular projections 6 and 7 and groove 8, and also externally, forming a swelling in diameter greater than the initial diameter of the tube itself.

Said preliminary operations having been carried out, it is possible to complete the coupling together (Fig. 2) by bringing the nut 4 towards the free end of the tube 3, pressing the head 2a of the sleeve 2 against the conical surface 9a of the element 9 and screwing up the nut 4 on the thread 9c.

The screwing up of the nut 4 onto the element 9 and the consequent sliding of said nut on the tube 3 causes said conical internal surface 4c of the nut to come into contact with the external surface portion of the tube 3 swollen by the insertion of the sleeve 2; by continuing the screwing-up, said surface 4c acts by compressing the tube against the corresponding conical surface 6a of the sleeve 2, causing a further deformation of the end portion of the tube, which adapts to the internal surface of the nut, being held by compression.

The screwing-up of the nut 4 on the thread 9c causes the simultaneous mechanical holding of the rounded surface 2d of the sleeve 2 against said conical surface 9a of the element 9, thus forming the hydraulic seal of the coupling.

Said rounded surface furthermore makes it possible to achieve the seal even under conditions of imperfect alignment of the various component parts, rendering the making of the connection easier and more effective.

## Claims

1. Coupling, especially for deformable tubes, characterized by the fact that it comprises a hydraulic sealing element equipped with a head part and with a shank part capable of being inserted into the interior of the tube to produce a surface deformation of same and mechanical holding means capable of being fitted around the exterior of the tube and equipped with coupling means adapted for engaging with the deformable surface of the tube by acting against said shank of the sealing element and with further means for fixing to the element to be brought into connection with the deformable tube.

2. Coupling, especially for deformable tubes, according to Claim 1, characterized by the fact that said head part of the hydraulic sealing element comprises a plane external surface leading into a rounded toroidal surface adapted for coming into bearing against a corresponding conical surface of the element to be connected to the tube, forming the seal and making possible coupling together even in conditions of imperfect axial alignment of the various parts.

3. Coupling, especially for deformable tubes, according to Claim 1, characterized by the fact that said shank part of the sealing element has a first and a second annular projection, defining a relief groove and adapted for deforming the internal and external surfaces of said tube upon insertion, said first projection having an external surface of conical form to facilitate the insertion.

4. Coupling, especially for deformable tubes, according to Claim 1, characterized by the fact that said holding means are constituted substantially of a nut capable of sliding on the external surface of the tube and equipped with an internal surface, adjacent to the slide hole, which is of conical form and is adapted for engaging, during the phase of coupling to the element to be connected, with the deformed external surface of the tube, forming the mechanical holding by compression of said tube onto the corresponding conical surface of said shank of the sealing element.

5. Coupling, especially for deformable tubes, according to Claim 1, characterized by the fact that the coupling together between said nut and the element to be coupled-on is achieved by screwing up the nut on the element itself.

*Fig.1*

*Fig.2*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 336 623 (SOCIETE DES FLEXIBLES ANOFLEX) <br> * Claim 1; figures 1,2 * <br> - - - | 1-5 | F 16 <br> L 33/22 |
| X | GB-A-1 188 512 (BTR IND. LTD) <br> * Figure 2 * <br> - - - | 1,2,4,5 | |
| A | | 3 | |
| X | US-A-3 408 099 (APPLETON) <br> * Figure 6 * <br> - - - | 1,4,5 | |
| A | - - - - - | 2,3 | |
| | | | **TECHNICAL FIELDS SEARCHED (Int. Cl.5)** |
| | | | F 16 L |

The present search report has been drawn up for all claims

| Place of search | Date of completion of search | Examiner |
|---|---|---|
| The Hague | 15 January 91 | BUDTZ-OLSEN A. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document